Europäisches Patentamt

European Patent Office

Office européen des brevets

(11) Publication number: **0 244 383 B1**

(12) **EUROPEAN PATENT SPECIFICATION**

(45) Date of publication of patent specification: **02.09.92**   (51) Int. Cl.⁵: **B62D 33/02**, B62D 27/06

(21) Application number: **87850136.0**

(22) Date of filing: **24.04.87**

(54) **Device in load decks for removably fastening a post.**

(30) Priority: **25.04.86 SE 8601942**

(43) Date of publication of application:
**04.11.87 Bulletin 87/45**

(45) Publication of the grant of the patent:
**02.09.92 Bulletin 92/36**

(84) Designated Contracting States:
**AT BE CH DE ES FR LI SE**

(56) References cited:
**DE-A- 2 933 610**
**US-A- 1 670 928**

(73) Proprietor: **ExTe Fabriks AB**
**Box 39**
**S-820 41 Färila(SE)**

(72) Inventor: **Olsson, Bernt**
**Box 185**
**S-820 42 Korskrogen(SE)**

(74) Representative: **Westerlund, Christer et al**
**L.A. Groth & Co Patentbyra AB, P.O. Box**
**6107**
**S-102 32 Stockholm(SE)**

Rank Xerox (UK) Business Services

# Description

## Technical Field

The present invention relates to a device in load decks for removably fastening a post in a tubular element, such as a lower post or a sleeve mounted on a horizontal beam of the load deck, with the aid of an actuating member mounted on the post, wherein inside the post there is a transfer member which can swing backwards and forwards inside the post and which includes a first part for actuating with the aid of the actuating member and a second part projecting out from the post for engagement with engagement means on the inside of the tubular element.

## Background Art

A large number of different devices of the kind mentioned above have been developed and utilised over the years. In such development it has been attempted to ensure that the fastening device will be reliable, easily accessible, simple and quick to operate, simple and cheap to manufacture and fit and to decrease and preferably eliminate vibrations and raffles between it, the post and the tubular element. The known devices only match up to certain of these desires or requirements.

DE-A-21 53 610 discloses a fastening device as described in the introduction to claim 1. This device is complicated and expensive to manufacture because it comprises a relatively large number of details.

## Disclosure of the Invention

The object of the present invention is to provide a device of the kind mentioned in the introduction, with which most of the abovementioned desires and requirements are met.

This object is achieved by the device in accordance with the invention having been given the distinguishing features disclosed in the characterizing portions of the claims.

## Description of Figures

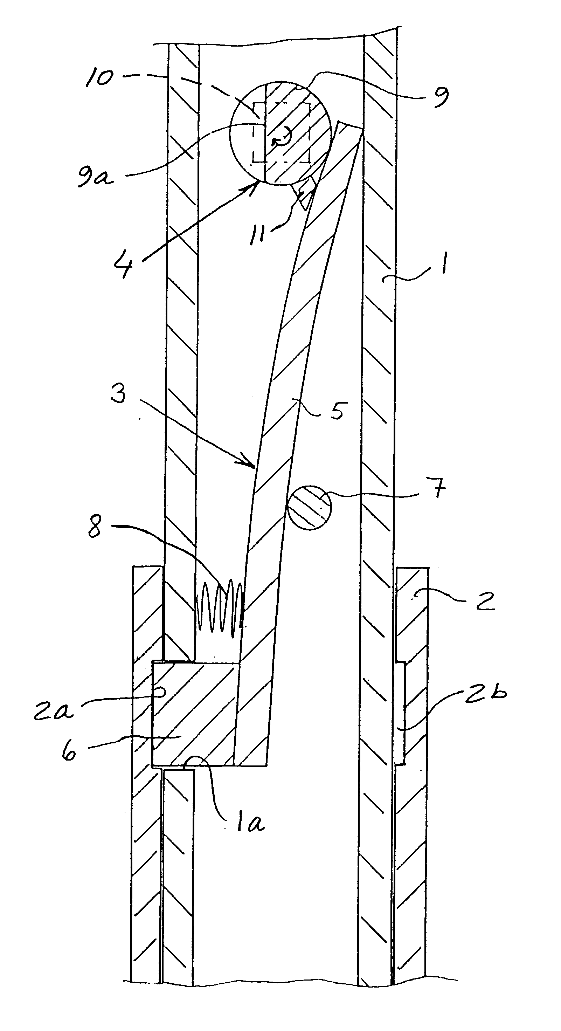

The single Figure on the drawing is a longitudinal section through a part of a load deck with the device in accordance with the invention.

## Preferred Embodiment

The hollow post of the load deck is denoted by the numeral 1, and the tubular element of the deck, which can be an upwardly open sleeve or a hollow, lower post is denoted by the numeral 2 and is fastened to an unillustrated beam in the load deck. The post 1 is telescopically displacable inside the element 2, and removably locked to it in the position illustated in the figure. The post and element suitably have square cross section.

Two inwardly open recesses 2a and 2b are made in opposite walls of the upper part of the element 2 to form engagement means, which are intended to engage with a transfer member 3 mounted inside the post 1, this transfer member in turn engaging with an actuating member 4 similarly mounted on the inside of the post. In the position illustrated in the figure, the recess 2a engages with the transfer member, while the recess 2b is intended to engage with the transfer member after the post has been turned 180° about its longitudinal axis.

The transfer member 3 includes a plate 5 of spring steel or other resilient material, a body 6 of steel or hard rubber which is attached to the plate and is accommodated in a hole 1a in the post 1, there also being a shaft 7 and a compression spring 8 inside the post 1 and associated with the transfer member 3, the spring acting between plate 5 and the wall of the post.

The actuating member 4 comprises a cylinder mounted for rotation in two opposing walls of the post 1 and provided with a central recess with a flat surface 9a. A pin 10 with a quadratic cross section is fastened to one end of the cylinder 9 and is accessible from the outside of the post for removable engagement with an unillustrated turning device, such as an adjustable spanner. A projection 11 on the cylinder 10 prevents the cylinder from being turned past the plate 5.

Before the post 1 is mounted and fixed to the element 2, the actuating member 4 is turned so that the plate 5 assumes, with the aid of the spring 8 a position where it engages against the surface 9a and against the shaft 7 and where the body 6 is within the outer definition of the post but still in the hole 1a so that the transfer member does not fall down in the post. After the post 1 has been inserted in the element 2 and the body 6 positioned opposite one of the recesses 2a and 2b, the actuating member 4 is turned anti-clockwise until the projection 11 comes into engagement against the plate 5, as illustated in the figure, when continued turning is not possible. During turning, the body 6 is inserted in the recess 2a or 2b and is successively pressed harder and harder against the element 2 while the plate 5 deflects and increases its spring bias. In the position illustrated in the figure, the post 1 is securely fixed in the element 2, partly by the body 6 and recess 2a or 2b preventing vertical relative movement between the body and the element and partly by the body 6 and the opposing wall of the post being pressed horizontally against the element 2 with the spring bias, which prevents rattle and vibrations occurring between the post and the element.

## Claims

1. Device in load decks for removably fastening a post (1) in a tubular element (2), such as a lower post or a sleeve mounted on a horizontal beam of the load deck, with the aid of an actuating member (4) mounted on the post, wherein inside the post there is a transfer member (3) which can swing backwards and forwards inside the post and which includes a first part (5) for actuating with the aid of the actuating member and a second part (6) projecting out from the post for engagement with engagement means (2a,2b) on the inside of the tubular element, **characterized** in that the transfer member (3) is resilient and swingable about a shaft (7) fastened on the inside of the post (1), the second part (6) of the transfer member engaging under spring bias with the engagement means (2a,2b) in the actuating position of the actuating member (4).

2. Device as claimed in claim 1, **characterized** in that the transfer member (3) comprises a two-armed lever (5) formed as a plate, with the first part (5) engaging against the actuating member and the second part (6) inserted in a hole (1a) made in the post (1).

3. Device as claimed in any one of the preceding claims, **characterized** by a resilient element (8) for taking the second part (6) out of engagement with the engagement means (2a,2b) when the actuating member (4) is not actuated.

4. Device as claimed in any one of the preceding claims, **characterized** in that the actuating member (4) comprises an eccentric.

## Patentansprüche

1. Befestigungsvorrichtung in einem Ladedeck für einen abnehmbaren Pfosten (1) in einem rohrförmigen Element (2), wie einem unteren Pfosten oder einer Hülse, der bzw. die auf einem horizontalen Träger des Ladedecks befestigt ist, mit einem am Pfosten angebrachten Betätigungsorgan (4), wobei innerhalb des Pfostens ein Übertragungsorgan (3) vorgesehen ist, das innerhalb des Pfostens vor und zurück schwenkbar ist und einen ersten Teil (5) zur Betätigung mittels des Betätigungsorganes und einen zweiten Teil (6) umfaßt, der zum Eingriff mit einem Verriegelungsorgan (2a, 2b) an der Innenseite des rohrförmigen Elementes vom Pfosten vorragt, dadurch gekennzeichnet, daß das Übertragungsorgan (3) federnd und um eine an der Innenseite des Pfostens (1) befestigte Achse (7) schwenkbar ist, wobei der zweite Teil (6) des Übertragungsorganes unter Federbelastung in der Betätigungsposition des Betätigungsorganes (4) in das Verriegelungsorgan (2a, 2b) eingreift.

2. Vorrichtung nach Patentanspruch 1, dadurch gekennzeichnet, daß das Übertragungsorgan (3) einen zweiarmigen, als Platte ausgebildeten Hebel (5) umfaßt, wobei der erste Teil (5) gegen das Betätigungsorgan anliegt und der zweite Teil (6) in ein Loch (1a) im Pfosten (1) eingesetzt ist.

3. Vorrichtung nach einem der vorhergehenden Patentansprüche, gekennzeichnet durch ein federndes Element (8), das den zweiten Teil (6) außer Eingriff vom Verriegelungsorgan (2a, 2b) bringt, wenn das Betätigungsorgan (4) nicht betätigt ist.

4. Vorrichtung nach einem der vorhergehenden Patentansprüche, dadurch gekennzeichnet, daß das Betätigungsorgan (4) einen Exzenter umfaßt.

## Revendications

1. Dispositif, sur une surface de chargement, de fixation amovible d'un montant (1) dans un élément tubulaire (2) tel qu'un montant inférieur ou un manchon monté sur une poutre horizontale de la surface de chargement, à l'aide d'un organe de commande (4) disposé sur le montant, un organe de transfert (3) étant logé à l'intérieur du montant, pouvant basculer vers l'arrière et vers l'avant à l'intérieur du montant, et comprenant une première partie (5) servant à l'actionnement à l'aide de l'organe de commande, et une seconde partie (6) dépassant du montant pour s'engager avec des organes d'engagement (2a, 2b) sur l'intérieur de l'élément tubulaire, caractérisé en ce que l'organe de transfert (3) est élastique et peut basculer autour d'un arbre (7) fixé à l'intérieur du montant (1), la deuxième partie (6) de l'organe de transfert s'engageant, déplacée par un ressort, avec les organes d'engagement (2a, 2b) dans la position d'actionnement de l'organe de commande (4).

2. Dispositif selon la revendication 1, caractérisé en ce que l'organe de transfert (3) comprend un levier à deux bras (5) en forme de plaque, sa première partie (5) s'engageant contre l'organe de commande et sa seconde partie (6) étant insérée dans un trou (1a) ménagé dans le montant (1).

3. Dispositif selon l'une quelconque des revendications précédentes, caractérisé par un élément élastique (8) destiné à désengager la seconde partie (6) des organes d'engagement (2a, 2b) lorsque l'organe de commande (4) n'est pas actionné.

4. Dispositif selon l'une quelconque des revendications précédentes, caractérisé en ce que l'organe de commande (4) comprend un excentrique.